# FASCICULE DE BREVET EUROPEEN

(11) **EP 1 556 766 B1**
(45) Date de publication et mention de la délivrance du brevet: **08.08.2007**
(21) Numéro de dépôt: 02785559.2
(22) Date de dépôt: 29.10.2002
(51) Int. Cl.: G06F 11/36

(54) **SURVEILLANCE D'UN PROGRAMME DE MICROPROCESSEUR PAR ENVOI DE MESSAGES REPERABLES DANS LE TEMPS**
ÜBERWACHUNG EINES MICROPROZESSORPROGRAMMS DURCH DAS SENDEN VON ZEITÖRTLICHEN NACHRICHTEN
MONITORING A MICROPROCESSOR PROGRAMME BY SENDING TIME-TRACKABLE MESSAGES

(43) Date de publication de la demande: 27.07.2005
(73) Titulaire: STMicroelectronics S.A., 92120 Montrouge (FR)
(72) Inventeur: REGNIER, Laurent, F-38610 Gieres (FR)
(74) Mandataire: de Beaumont, Michel
(86) Numéro de dépôt international: PCT/FR2002/003724
(87) Numéro de publication internationale: WO 2004/042579

(56) Documents cités:
- EP-A- 1 184 790
- PLAUGER D: "REAL-TIME UNIX: TIMING IS EVERYTHING" MINI MICRO SYSTEMS, CAHNERS PUBLISHING CY. BOSTON, US, vol. 22, no. 2, 1 février 1989 (1989-02-01), pages 72-76, XP000039292

## Description

La présente invention concerne le test de microprocesseurs. Elle concerne plus particulièrement un dispositif et un procédé pour transmettre depuis un circuit de surveillance intégré dans une puce de microprocesseur des messages numériques datés permettant de suivre le fonctionnement du microprocesseur.

D1 EP-A-1184790 décrit un circuit intégré à un microprocesseur, ce circuit permettant de capturer la séquence d'instructions exécutées par le microprocesseur et de communiquer avec un circuit d'analyse externe.

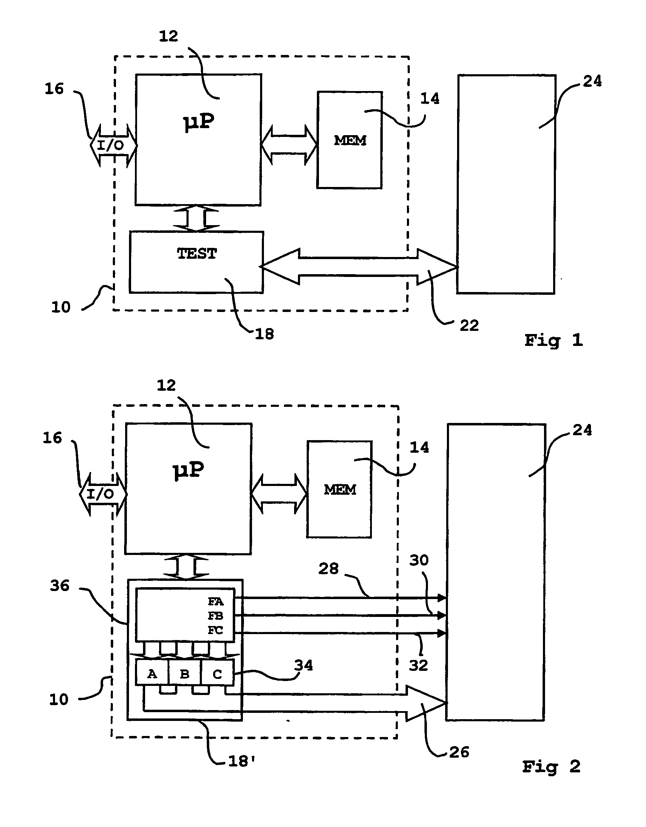

La figure 1 représente de façon schématique un circuit intégré 10 comportant un microprocesseur (µP) 12, une mémoire interne (MEM) 14 et des bornes d'entrée/sortie (I/O) 16. Le microprocesseur 12 est destiné à exécuter un programme ou logiciel stocké dans la mémoire 14. Sous la commande du programme, le microprocesseur 12 peut traiter des données fournies par les bornes d'entrée/sortie 16 ou stockées dans la mémoire 14 et lire ou écrire des données par les bornes d'entrée/sortie 16.

De façon à vérifier le bon fonctionnement du microprocesseur, on intègre généralement au circuit intégré 10 un circuit de surveillance 18 (TEST). Le circuit de surveillance 18 est adapté à lire des données spécifiques fournies par le microprocesseur 12 lors du déroulement d'un programme, et à réaliser éventuellement un traitement sur les données lues. Des bornes de test 22 relient le circuit de surveillance 18 à un outil d'analyse 24. L'outil d'analyse 24 peut effectuer un traitement des signaux reçus, par exemple en fonction de commandes fournies par un utilisateur, et assurer une analyse détaillée du fonctionnement du microprocesseur 12. En particulier, l'outil d'analyse 24 peut déterminer la séquence d'instructions du programme réellement exécutée par le microprocesseur 12.

Le nombre de bornes de test 22 peut être du même ordre de grandeur que le nombre de bornes d'entrée/sortie 16, par exemple 200 à 400 bornes. Les bornes de test 22 ainsi que les connexions du circuit de surveillance 18 occupent une surface de silicium importante, ce qui entraîne un accroissement indésirable du coût du circuit. Pour cela, une première version du circuit intégré 10 incluant le circuit de surveillance 18 et les bornes de test 22 est produite en petites quantités pour effectuer la mise au point du programme du microprocesseur 12 ou "programme utilisateur". Après cette mise au point, une version du circuit intégré 10 débarrassée du circuit de surveillance 18 et des bornes de test 22 est commercialisée. Cela implique la réalisation de deux versions du circuit intégré, ce qui demande un travail important et est relativement coûteux. De plus, la puce finale n'est pas forcément identique à la puce testée.

Pour pallier les inconvénients précédemment mentionnés, on cherche à réaliser un circuit de surveillance 18 qui occupe une surface réduite et nécessite seulement un nombre réduit de bornes de test 22, ce qui diminue le coût de revient du circuit de surveillance. Le circuit de surveillance 18 peut alors être laissé sur le circuit intégré 10 finalement commercialisé.

On cherche donc à diminuer le nombre de signaux fournis par le circuit de surveillance 18. Pour ce faire, on fait réaliser directement au niveau du circuit de surveillance 18 certaines opérations logiques sur les données mesurées au niveau du microprocesseur 12 de façon à transmettre seulement des messages ayant un contenu informationnel important.

Ainsi, la norme IEEE-ISTO-5001 en préparation propose dans sa version de 1999, accessible par exemple sur le site www.ieee-isto.org/Nexus5001, un protocole particulier d'échanges de messages entre un circuit de surveillance et un outil d'analyse pour un circuit de surveillance 18 ne nécessitant qu'un nombre réduit de bornes de test 22.

Le circuit de surveillance est prévu pour surveiller le fonctionnement du microprocesseur et pour fournir aux bornes de test des messages prédéterminés correspondant seulement à l'exécution de certaines instructions prédéterminées. Plusieurs types de messages sont prévus, qui correspondent à l'exécution d'instructions de types différents. Les différents types de messages et leur structure sont décrits dans la section 6 de la norme IEEE ISTO-5001.

Un grand nombre de messages peut être produit dans un intervalle de temps réduit. La norme prévoit que chaque nouveau message est stocké dans une mémoire tampon lorsque les bornes de test ne sont pas disponibles (lorsqu'elles sont utilisées pour transmettre un autre message), puis est envoyé à l'outil d'analyse lorsque les bornes de test sont disponibles. Lorsqu'un message comporte plus de bits qu'il n'y a de bornes de test, la norme prévoit que le message est divisé en segments de taille appropriée qui sont envoyés à la suite par les bornes de test. Ainsi, plus un message est grand, plus il faut du temps pour l'envoyer à l'outil d'analyse. L'outil d'analyse est prévu pour reconstituer le fonctionnement du microprocesseur, c'est-à-dire le déroulement du programme dans le microprocesseur, à partir des messages reçus et du code du programme. Un problème vient du fait que, si l'outil d'analyse détermine facilement le temps qui s'est écoulé entre la réception de deux messages, l'outil d'analyse ne dispose d'aucun moyen pour déterminer le temps qui s'est écoulé entre le stockage de ces deux messages. En effet, l'outil d'analyse reçoit chaque message à un instant de réception qui n'a pas de rapport avec l'instant auquel chaque message a été stocké par le circuit 18. Entre l'instant auquel un message est stocké et l'instant auquel ce message est reçu par l'outil d'analyse, le message demeure dans la mémoire tampon pendant une durée variable qui dépend de nombreux facteurs tels que la taille et le nombre des messages stockés auparavant dans la mémoire tampon. Un certain type de messages prévu par la norme indique bien le nombre d'instructions exécutées par le microprocesseur depuis un message précédent de même type, mais la vitesse à laquelle le microprocesseur exécute les instructions varie d'une instruction à l'autre, et le nombre d'instructions exécutées entre deux messages permet juste une évaluation du temps écoulé entre ces deux messages. Il est pourtant souhaitable de mesurer avec précision le temps écoulé entre le stockage de deux messages, notamment pour mesurer la durée d'exécution de certaines parties critiques du programme du microprocesseur.

Pour mesurer le temps écoulé entre le stockage de deux messages, une solution consiste à inclure dans le circuit de surveillance 18 un compteur cadencé à une fréquence prédéterminée, dont le comptage évolue avec le temps. Il suffit d'ajouter dans chaque message un champ de données contenant le comptage à l'instant où chaque message est stocké pour dater cet instant. Cependant, pour qu'une telle datation soit suffisamment précise, le compteur doit être cadencé à une fréquence élevée. Le comptage augmente ainsi très rapidement et le compteur doit être de taille importante pour ne pas être saturé. Un tel compteur occupe une surface importante, ce qui n'est pas souhaitable. En outre, l'introduction du comptage dans les messages accroît sensiblement la taille des messages. Les messages incluant le comptage doivent être divisés en un grand nombre de segments dont la transmission monopolise longtemps les bornes de test, ce qui n'est pas souhaitable.

Un objet de la présente invention est de prévoir un circuit de surveillance conforme à la norme IEEE-ISTO-5001 qui permette de mesurer le temps écoulé entre deux messages.

Un autre objet de la présente invention est de prévoir un procédé de surveillance conforme à la norme IEEE-ISTO-5001 qui permette de mesurer le temps écoulé entre deux messages.

Pour atteindre ces objets, ainsi que d'autres la présente invention prévoit un dispositif de surveillance intégré à la puce d'un microprocesseur exécutant une suite d'instructions, comprenant : un moyen de calcul de messages pour, lors de chaque exécution d'une instruction parmi une pluralité d'instructions de types prédéterminés, produire un message numérique correspondant à l'instruction exécutée ; une mémoire tampon pour stocker chaque message produit ; et une pluralité de bornes de sortie reliées à un outil d'analyse externe ; chaque borne de sortie étant associée à l'un des types d'instructions et le moyen de calcul de messages modifiant l'état de la borne de sortie associée à un type d'instructions au moment où un message correspondant audit type d'instructions est stocké en mémoire tampon.

Selon un mode de réalisation de la présente invention, la mémoire tampon est divisée en plusieurs zones dont chacune est associée à un type d'instructions différent et destinée à ne stocker que des messages associés audit type d'instructions.

Selon un mode de réalisation de la présente invention, chaque borne de sortie est connectée à une borne de test.

Selon un mode de réalisation de la présente invention, chaque borne de sortie est connectée à une borne d'entrée d'un bloc de codage comportant un nombre prédéterminé n de bornes de sortie dont chacune est connectée à une borne de test ; chaque bloc de codage étant prévu pour faire changer chacune de ses n bornes de sortie une fois tous les n changements d'état de sa borne d'entrée et de telle manière qu'une seule de ses n bornes de sortie change d'état à la fois.

Selon un mode de réalisation de la présente invention, certains types d'instructions seulement sont associés à une borne de sortie du moyen de calcul de messages.

Selon un mode de réalisation de la présente invention, chacun des types d'instructions possibles est associé à une borne de sortie du moyen de calcul de messages.

La présente invention vise également un circuit intégré comportant un microprocesseur et un tel dispositif de surveillance.

La présente invention vise également un procédé de surveillance d'un microprocesseur exécutant une suite d'instructions au moyen d'un dispositif intégré à la puce du microprocesseur, comprenant les étapes suivantes :
lors de chaque exécution d'une instruction, produire un message numérique correspondant à l'instruction exécutée ; et
stocker chaque message produit dans une mémoire tampon ; et
modifier l'état de l'une d'une pluralité de bornes de sortie reliées à un outil d'analyse externe et associées chacune à un type d'instructions lorsqu'un message correspondant au type d'instructions auquel est associée ladite borne de sortie est stocké en mémoire tampon.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1, précédemment décrite, représente de manière schématique un circuit intégré muni d'un dispositif de surveillance ;
la figure 2 représente de manière schématique un circuit intégré muni d'un dispositif de surveillance selon la présente invention ;
la figure 3 représente de manière schématique un dispositif de surveillance selon une variante de la présente invention ; et
la figure 4 illustre le fonctionnement d'un bloc de codage de la figure 3.

La présente invention prévoit d'utiliser plusieurs bornes de test supplémentaires changeant d'état pour indiquer directement à l'outil d'analyse l'instant auquel des messages de plusieurs types prédéterminés sont stockés dans la mémoire tampon incluse dans le dispositif. Pour cela, la présente invention prévoit de diviser la mémoire tampon en plusieurs zones prédéterminées prévues chacune pour recevoir des messages d'un type parmi plusieurs types prédéterminés, chaque zone étant associée à une borne de test supplémentaire reliée à l'outil d'analyse. Lorsqu'un nouveau message est stocké dans l'une des zones, l'état de la borne de test supplémentaire associée à cette zone est modifié.

La figure 2 représente de façon schématique un circuit intégré 10 comportant comme en figure 1 un microprocesseur 12 relié à une mémoire interne 14 et à des bornes d'entrée/sortie 16. Le circuit 10 comporte un circuit de surveillance 18' selon la présente invention relié au microprocesseur 12. Le circuit 18' comporte une mémoire tampon 34 reliée à l'outil d'analyse 24 par l'intermédiaire de bornes de test constituant un accès parallèle 26. Un moyen de calcul 36 recevant des informations sur les instructions exécutées par le microprocesseur identifie le type d'instructions concerné et calcule des messages prévus par la norme. Le moyen de calcul 36 est relié à la mémoire tampon 34 et est relié à l'outil d'analyse 24 par des bornes de test supplémentaires 28, 30 et 32.

Les instructions prédéterminées pour lesquelles la norme IEEE-ISTO-5001 prévoit qu'un message doit être produit sont de plusieurs types. A chaque type d'instructions correspond un type de message. Notamment, la norme IEEE-ISTO-5001 distingue les instructions de saut de programme, d'écriture en mémoire, et de lecture en mémoire, auxquelles correspondent respectivement des messages de saut, d'écriture et de lecture. Selon la présente invention, la mémoire 34 comporte une zone A dans laquelle le moyen 36 stocke exclusivement des messages de saut, une zone B dans laquelle le moyen 36 stocke exclusivement des messages d'écriture et une zone C dans laquelle le moyen 36 stocke exclusivement des messages de lecture. Une telle division de la mémoire tampon en trois zones pour ces trois types de messages n'est donnée qu'à titre d'exemple, et l'homme du métier adaptera sans difficultés la présente invention à une autre division de la mémoire tampon.

Selon la présente invention, le moyen de calcul 36 comporte une borne de sortie FA reliée à la borne de test 28. Le moyen 36 est prévu pour modifier la valeur (1 ou 0) de sa borne de sortie FA (et de la borne de test 28) à chaque fois que le moyen 36 stocke un message dans la zone A de la mémoire tampon 34. L'outil d'analyse 24 est prévu pour mémoriser les instants de changement d'état de la borne de test 28, c'est-à-dire les instants de stockage de messages de saut. L'outil d'analyse sait ainsi qu'un premier message de saut reçu depuis la mémoire tampon 34 a été produit et stocké à l'instant du premier changement d'état de la borne de test 28, et ainsi de suite.

De même, le moyen 36 comporte deux bornes de sortie FB et FC respectivement reliées aux bornes de test 30 et 32, dont la valeur est modifiée à chaque fois que le moyen 36 stocke un message respectivement dans la zone B ou C de la mémoire tampon 34.

La présente invention permet ainsi à l'outil d'analyse de dater avec précision la production et le stockage de chaque type de message produit par le moyen de calcul 36 du circuit d'analyse 18'. Les trois bornes de test 28, 30 et 32 supplémentaires et les moyens pour les actionner prévus par la présente invention occupent une surface réduite par rapport au compteur de datation connu, ce qui représente un premier avantage de la présente invention. La présente invention permet en outre de dater avec précision l'instant de stockage des messages sans accroître la taille des messages, ce qui représente un deuxième avantage de l'invention.

Certains microprocesseurs peuvent être prévus pour exécuter en parallèle plusieurs instructions du programme. Par exemple, si le programme du microprocesseur prévoit un saut de programme à une adresse obtenue par une lecture, le microprocesseur peut être prévu pour exécuter simultanément l'instruction de "lecture" et l'instruction de "saut". Dans un tel cas, le moyen 36 produit un message de "saut", il le stocke dans la zone A et il modifie l'état de la borne de sortie FA et simultanément le moyen 36 produit un message de "lecture", il le stocke dans la zone C et il modifie l'état de la borne de sortie FC. L'outil d'analyse sait ainsi avec précision à quel instant un stockage simultané a eu lieu dans les zones A et C. L'homme du métier notera qu'il est important pour cela que les stockages dans les zones A et C soient indiqués par le changement d'état de deux bornes de sortie distinctes. La présente invention est ainsi particulièrement adaptée au fait que le microprocesseur peut exécuter plusieurs instructions ou opérations du programme en parallèle, ce qui constitue un avantage supplémentaire de la présente invention.

Un problème peut apparaître lorsque le microprocesseur exécute rapidement à la suite une pluralité d'instructions de même type. Si par exemple le microprocesseur exécute à la suite plusieurs instructions d'écriture, chacune en un cycle d'horloge, des messages d'écriture sont stockés à la suite dans la zone B de la mémoire tampon à chaque cycle d'horloge du microprocesseur. La borne de sortie FB change alors d'état avec chaque stockage de message à chaque cycle d'horloge du microprocesseur, ce qui correspond à une oscillation de la borne de sortie FB à la moitié de la fréquence de travail du microprocesseur. Or cette fréquence peut être très élevée et la borne de test supplémentaire 30 reliée à la borne de sortie FB peut ne pas être conçue pour fonctionner à une telle fréquence. A titre d'illustration, le microprocesseur peut exécuter des instructions à une fréquence de 400 MHz, et entraîner une oscillation de la borne de sortie FB à 200 MHz, alors que la borne de test 30 ne peut, de par sa structure, pas fonctionner au-delà de 100 MHz.

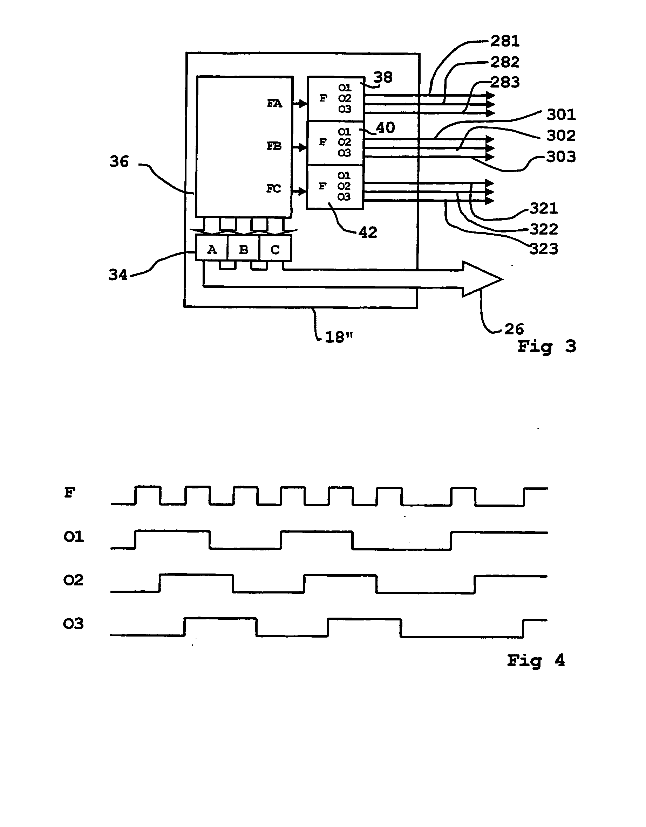

La figure 3 représente de manière schématique un circuit de surveillance 18" prévu pour résoudre le problème précédent selon une variante de la présente invention, comportant comme le circuit 18' de la figure 2 une mémoire tampon 34 reliée à un accès parallèle 26 et à un moyen de calcul 36. Les trois bornes de sortie FA, FB et FC du moyen 36 sont chacune reliée à une entrée F de trois blocs de codage identiques, respectivement 38, 40 et 42. Chaque bloc de codage comporte trois bornes de sortie O1, O2, O3. Les bornes de sortie O1, O2 et O3 du bloc 38 sont reliées à l'outil d'analyse (non représenté) par des bornes de test supplémentaires 281, 282 et 283. Les bornes de sortie 01, 02, 03 des blocs de codage 40 et 42 sont respectivement reliées à l'outil d'analyse par des bornes de test supplémentaires 301, 302, 303 et 321, 322, 323.

La figure 4 illustre les changements d'état des bornes de sortie O 02 et 03 de l'un quelconque des blocs de codage 38, 40, 42 en fonction des changements d'état de sa borne d'entrée F. Quelle que soit la cadence à laquelle l'état de la borne d'entrée F change, chacune des bornes de sortie 01, 02, 03 change d'état une fois tous les trois changements d'état de la borne d'entrée F, et seule l'une des trois bornes de sortie 01, 02, 03 change d'état à la fois.

Dans le cas décrit précédemment où la borne FB change d'état à une fréquence de 200 MHz, les bornes de sortie 01, 02 et 03 du bloc de codage 40 changent d'état chacune à une fréquence de 67 MHz, inférieure à la fréquence maximale de 100 MHz à laquelle peuvent fonctionner les bornes de test 301, 302 et 303.

Bien entendu, la présente invention est susceptible de diverses variantes et modifications qui apparaîtront à l'homme du métier. En particulier, la présente invention a été décrite en relation avec un circuit de surveillance qui associe une borne de sortie supplémentaire à chaque zone de la mémoire tampon de manière à dater chaque message écrit dans la mémoire tampon, mais l'homme du métier adaptera sans difficultés la présente invention à un circuit de surveillance qui n'associe une borne de sortie supplémentaire qu'à certaines zones de la mémoire tampon de manière à ne dater que les messages écrits dans lesdites zones.

La présente invention a été décrite en relation avec un circuit de surveillance qui associe une zone de la mémoire tampon à un type de message, mais l'homme du métier adaptera sans difficultés la présente invention à un circuit de surveillance qui associe plusieurs zones de la mémoire tampon à un type de message particulier ou à chaque type de message.

La structure de la mémoire tampon utilisée par un circuit de surveillance selon la présente invention n'a pas été décrite, mais l'homme du métier adaptera sans difficultés la présente invention à toute structure appropriée de mémoire tampon, par exemple une mémoire tampon de type premier entré/premier sorti (FIFO). Dans un tel cas, chaque zone de la mémoire tampon sera constituée d'une mémoire premier entré/premier sorti distincte.

La présente invention a été décrite en relation avec un bloc de codage ayant trois bornes de sortie pour diviser par trois la fréquence de changement d'état de sa borne de sortie, mais l'homme du métier adaptera sans difficultés la présente invention à tout bloc de codage comportant un nombre de bornes de sortie adapté à une division de fréquence selon un rapport différent ; par exemple 2 bornes pour une division par 2, 4 bornes pour une division par 4.

La présente invention a été décrite en relation avec un bloc de codage ayant un fonctionnement particulier, mais l'homme du métier adaptera sans difficultés la présente invention à tout bloc de codage ayant une fonction de codage équivalente. Par exemple, le bloc de codage peut fournir par ses bornes de sortie une nouvelle valeur d'un code de Gray pour chaque changement d'état de son entrée.

## Revendications

1. Dispositif de surveillance (18', 18") intégré à la puce d'un microprocesseur (12) exécutant une suite d'instructions, comprenant :
un moyen de calcul de messages (36) pour, lors de chaque exécution d'une instruction parmi une pluralité d'instructions de types prédéterminés, produire un message numérique correspondant à l'instruction exécutée ;
une mémoire tampon (34) pour stocker chaque message produit ; et
une pluralité de bornes de sortie (FA, FB, FC) destinées à être reliées à un outil d'analyse externe chaque borne de sortie (FA, FB, FC) étant associée à l'un de types d'instructions et le moyen de calcul de messages (36) modifiant l'état de la borne de sortie (FA, FB, FC) associée à un type d'instructions au moment où un message correspondant audit type d'instructions est stocké en mémoire tampon.

2. Dispositif de surveillance (18', 18") selon la revendication 1, dans lequel la mémoire tampon est divisée en plusieurs zones (A, B, C) dont chacune est associée à un type d'instructions différent et destinée à ne stocker que des messages associés audit type d'instructions.

3. Dispositif de surveillance selon la revendication 1, dans lequel chaque borne de sortie (FA, FB, FC) est connectée à une borne de test (28, 30, 32).

4. Dispositif de surveillance selon la revendication 1, dans lequel chaque borne de sortie (FA, FB, FC) est connectée à une borne d'entrée (F) d'un bloc de codage (38, 40, 42) comportant un nombre prédéterminé (n) de bornes de sortie (01, 02, 03) dont chacune est connectée à une borne de test (281, 282, 283 ; 301, 302, 303 ; 321, 322, 323) ; chaque bloc de codage étant prévu pour faire changer chacune de ses n bornes de sortie (01, 02, 03) une fois tous les n changements d'état de sa borne d'entrée (F) et de telle manière qu'une seule de ses n bornes de sortie (01, 02, 03) change d'état à la fois.

5. Dispositif de surveillance selon la revendication 1, dans lequel certains types d'instructions seulement sont associés à une borne de sortie du moyen de calcul de messages (24).

6. Dispositif de surveillance selon la revendication 1, dans lequel chacun des types d'instructions possibles est associé à une borne de sortie (FA, FB, FC) du moyen de calcul de messages (24).

7. Circuit intégré (10) comportant un microprocesseur (12) et un dispositif de surveillance selon la revendication 1.

8. Procédé de surveillance d'un microprocesseur (12) exécutant une suite d'instructions au moyen d'un dispositif intégré à la puce du microprocesseur, comprenant les étapes suivantes :
lors de chaque exécution d'une instruction, produire un message numérique correspondant à l'instruction exécutée ; et
stocker chaque message produit dans une mémoire tampon (34) ; et
modifier l'état de l'une d'une pluralité de bornes de sortie (FA, FB, FC) reliées à un outil d'analyse externe (24) et associées chacune à un type d'instructions lorsqu'un message correspondant au type d'instructions auquel est associée ladite borne de sortie est stocké en mémoire tampon.

## Claims

1. A monitoring device (18', 18") integrated to the chip of a microprocessor (12) executing a sequence of instructions, comprising:
a message calculation means (36) for, on each execution of an instruction from among a plurality of instructions of predetermined types, generating a digital message corresponding to the executed instruction;
a buffer memory (34) for storing each generated message; and
a plurality of output terminals (FA, FB, FC), each output terminal (FA, FB, FC) being associated with one of the instruction types and the message calculation means (36) modifying the state of the output terminal (FA, FB, FC) associated with an instruction type at the time when a message corresponding to said instruction type is stored in the buffer memory.

2. The monitoring device (18', 18") of claim 1, wherein the buffer memory is divided into several areas (A, B, C), each of which is associated with a different instruction type and is intended to only store messages associated with said instruction type.

3. The monitoring device of claim 1, wherein each output terminal (FA, FB, FC) is connected to a test terminal (28, 30, 32).

4. The monitoring device of claim 1, wherein each output terminal (FA, FB, FC) is connected to an input terminal (F) of a coding block (38, 40, 42) comprising a predetermined number (n) of output terminals (01, 02, 03), each of which is connected to a test terminal (281, 282, 283; 301, 302, 303; 321, 322, 323); each coding block being provided to have each of its n output terminals (01, 02, 03) switch once every n state switchings of its input terminal (F) and so that a single one of its n output terminals (01, 02, 03) switches state at once.

5. The monitoring device of claim 1, wherein certain types of instructions only are associated with an output terminal of the message calculation means (24).

6. The monitoring device of claim 1, wherein each of the possible instruction types is associated with an output terminal (FA, FB, FC) of the message calculation means (24).

7. An integrated circuit (10) comprising a microprocessor (12) and the monitoring device of claim 1.

8. A method for monitoring a microprocessor (12) executing a sequence of instructions by means of a device integrated to the microprocessor chip, comprising the steps of:
on each execution of an instruction, generating a digital message corresponding to the executed instruction; and
storing each generated message in a buffer memory (34) ; and
modifying the state of one of a plurality of output terminals (FA, FB, FC) connected to an external analysis tool (24) and each associated with an instruction type when a message corresponding to the instruction type to which said output terminal is associated is stored in the buffer memory.

## Patentansprüche

1. In den Chip eines eine Folge von Befehlsinstruktionen ausführenden Mikroprozessors (12) integrierte Überwachungsvorrichtung (18', 18"), umfassend
ein Rechenmittel (36) zur Berechnung von Botschaften bzw. Nachrichten, um jeweils jedes Mal bei Ausführung einer Befehlsinstruktion aus einer Mehrzahl von Befehlsinstruktionen vorgegebenen Typs eine der ausgeführten Befehlsinstruktion entsprechende Botschaft bzw Nachricht zu erzeugen;
einen Pufferspeicher (34) zur Speicherung jeweils jeder erzeugten Botschaft bzw Nachricht; sowie
eine Mehrzahl
Ausgangsanschlüssen (FA, FB, FC) wobei jeweils jeder Ausgangsanschluß (FA, FB, FC) jeweils einem der Typen von Befehlsinstruktionen zugeordnet ist und das Rechenmittel (36) zur Berechnung von Botschaften bzw, Nachrichten jeweils den Zustand des einem Befehlstyp zugeordneten Ausgangsanschlusses (FA, FB, FC) jeweils in dem Zeitpunkt modifiziert, in dem eine dem betreffenden Befehlstyp entsprechende Botschaft bzw Nachricht in dem Pufferspeicher gespeichert wird.

2. Überwachungsvorrichtung (18, 18) nach Anspruch 1, in welcher der Pufferspeicher in mehrere Zonen (A, B, C) unterteilt ist, deren jede jeweils einem verschiedenen Befehlstyp zugeordnet und dazu ausgebildet und bestimmt ist, dass sie jeweils nur dem genannten Befehlstyp zugeordnete Botschaften bzw. Nachrichten speichert

3. Überwachungsvorrichtung nach Anspruch 1, in welcher jeweils jeder Ausgangsanschluß (FA, FB, FC) mit einem Test- bzw. Prüfanschluß (28, 30, 32) verbunden ist

4. Überurachungsorrichiung nach Anspruch 1, in welcher jeweils jeder Ausgangsanschluß (FA, FB, FC) mit einem Eingangsanschluß (F) eines Kodierungsblocks (38, 40, 42) verbunden ist, der eine vorgegebene Anzahl (n) von Ausgangsanschlüssen (01, 02, 03) umfasst, von denen jeweils jeder mit einem Test- bzw Prüfanschluß (281, 282, 283; 301, 302, 303; 321, 322, 323) verbunden ist; wobei jeweils jeder Kodierungsblock so vorgesehen ist, dass er jeweils jeden seiner n Ausgangsanschlüsse (01,02, 03) jeweils einmal je alle n Zustandsänderungen seines Eingangsanschlusses (F) zu einer Änderung veranlasst, und zwar derart, dass jeweils nur einer seiner n Ausgangsanschlüsse (01, 02, 03) auf einmal seinen Zustand ändert.

5. Überwachungsvorrichtung nach Anspruch 1, bei welcher jeweils nur bestimmte Befehlstypen einem Ausgangsanschluß des Rechenmittels (24) zur Berechnung von Botschaften bzw Nachrichten zugeordnet sind.

6. Überwachungsvorrichtung nach Anspruch 1, in welchem jeweils jeder der möglichen Typen von Befehlsinstruktionen einem Ausgangsanschluß (FA, FB, FC) des Rechenmittels (24) zur Berechnung von Botschaften bzw. Nachrichten zugeordnet ist.

7. Integrierte Schaltung (10), welche einen Mikroprozessor (12) und eine Überwachungsvorrichtung nach Anspruch 1 aufweist

8. Verfahren zur Überwachung eines eine Folge von Befehlsinstruktionen ausführenden Mikroprozessors (12) mittels einer in den Chip des Mikroprozessors integrierten Überwachungsvorrichtung, das Verfahren umfassend die folgenden Stufen bzw. Schritte:
bei jeder Ausführung einer Befehlsinstruktion jeweils Erzeugen einer der ausgeführten Befehlsinstruktion entsprechenden digitalen Botschaft bzw, Nachricht;
Speichern jeweils jeder erzeugten Botschaft bzw Nachricht in einem Pufferspeicher (34); sowie
Ändern des Zustands eines von mehreren Ausgangsanschlüssen (FA, FB, FC), die mit einem externen Analysewerkzeug (24) verbunden sind und die jeweils jeder einem Typ von Befehlsinstruktion zugeordnet sind, sobald eine Botschaft bzw. Nachricht entsprechend dem Typ von Befehlsinstruktion, welchem der genannte Ausgangsanschluß zugeordnet ist, in dem Pufferspeicher gespeichert wird.
